# EUROPEAN PATENT SPECIFICATION

(11) **EP 2 961 823 B1**
(45) Date of publication and mention of the grant of the patent: **15.08.2018**
(21) Application number: 14715990.9
(22) Date of filing: 03.03.2014
(51) Int. Cl.: C12G 1/02, C12G 1/00

(54) **VINIFICATION PROCESS**
WEINBEREITUNGSVERFAHREN
PROCÉDÉ DE VINIFICATION

(30) Priority: 01.03.2013 IT PD20130052
(43) Date of publication of application: 06.01.2016
(73) Proprietor: ENOLOGICA VASON S.P.A., 37029 San Pietro in Cariano (VR) (IT)
(72) Inventor: VASON, Albano, I-37029 San Pietro in Cariano (VR) (IT); BOCCA, Enrico, I-37015 Sant'Ambrogio di Valpolicella (VR) (IT); FERRARINI, Roberto, I-37022 Fumane (VR) (IT)
(74) Representative: Gallo, Luca
(86) International application number: PCT/IB2014/000234
(87) International publication number: WO 2014/132123

(56) References cited:
- CN-A- 101 683 149
- US-A- 5 204 114
- FRANCESCA SONNI ET AL: "Antioxidant Action of Glutathione and the Ascorbic Acid/Glutathione Pair in a Model White Wine", JOURNAL OF AGRICULTURAL AND FOOD CHEMISTRY, vol. 59, no. 8, 27 April 2011 (2011-04-27) , pages 3940-3949, XP055075702, ISSN: 0021-8561, DOI: 10.1021/jf104575w
- YILDIRIM O ET AL: "ACTIVE OXYGEN SCAVENGING ENZYME ACTIVITIES AND GLUTATHIONE, ASCORBIC ACID AND LIPID PEROXIDATION LEVELS IN DEVELOPING VITIS VINIFERA L. LEAVES AND BERRIES", BIOTECHNOLOGY & BIOTECHNOLOGICAL EQUIPMENT, DIAGNOSIS PRESS, SOFIA, BG, vol. 17, no. 2, 1 January 2003 (2003-01-01), pages 114-122, XP009052472, ISSN: 1310-2818
- OKUDA T ET AL: "Levels of glutathione and activities of related enzymes during ripening of Koshu and Cabernet Sauvignon grapes and during winemaking", AMERICAN JOURNAL OF ENOLOGY AND VITICULTURE, AMERICAN SOCIETY FOR ENOLOGY AND VITICULTURE, US , vol. 50, no. 3 1 September 1999 (1999-09-01), pages 264-270, XP008164277, ISSN: 0002-9254 Retrieved from the Internet: URL:http://www.ajevonline.org/content/50/3 /264.abstract [retrieved on 2013-08-20]
- RIGAUD ET AL.: "Influence of must composition on phenolic oxidation kinetics", JOURNAL OF THE SCIENCE OF FOOD AND AGRICULTURE, vol. 57, no. 1, 1991, pages 55-63, XP002711470,

## Description

### Field of application

The present invention regards a vinification process.

The present process is adapted to be advantageously used in the wine industry for inhibiting the oxidative phenomena that occur during the vinification processes and which can negatively affect the organoleptic characteristics of the wine obtained at the end of vinification.

### State of the art

As is known, during the vinification process the exposure of the pulp of the grapes of the grape mass and subsequently of the must and of the wine to the air and to oxygen leads to the start of chemical and enzymatic oxidation reactions of the phenolic and aromatic compounds present in the grapes, and such oxidation reactions negatively affect the varietal aroma of the wine produced.

In order to obtain wines with optimal organoleptic properties, with distinct varietal character, numerous vinification processes have for some time been implemented that provide for protecting the grapes, the must and the finished wine from oxidation.

In particular, vinification processes have for many years been used in winemaking practice which provide for the use of antioxidant products, which are added to the grapes, to the must and/or to the wine in different vinification steps.

An enological product widely used in the wine field as an antioxidant additive is for example sulphur dioxide, which is generally added to the grapes or the must by means of potassium metabisolphite in powder form or as gas possibly in solution or as ammonium salts.

Sulphur dioxide is widely used in the wine industry, and more generally in the food industry, since in addition to carrying out an antioxidant action - being capable of combining dissolved oxygen therewith - it is also adapted to carry out an antioxidase action, inhibiting the action of the oxidase enzymes, such as tyrosinase and laccase, and an antiseptic action, inhibiting the growth of microorganisms.

A vinification process making use of sulphur dioxide as antioxidant additive and an enological product capable of developing sulphur dioxide and adapted to be used in such vinification process are for example described in the patent application RA2010A000008.

The process described therein comprises a step for collecting a must inside a container, a step for adding the aforesaid enological product constituted by a mixture containing potassium disulphite and potassium bicarbonate in the must, for determining the production of sulphur dioxide and carbon dioxide. In particular, the enological product employed in the vinification process described therein is in the form of tablets adapted to be introduced into the must.

The vinification process and the enological product described in the patent application RA2010A000008 and, more generally, all the enological processes and products making use of sulphur dioxide have, however, several important drawbacks.

The main drawback lies in the fact that sulphur dioxide as well as the sulphide compounds derived therefrom are harmful for the health of the people who drink the wine that contains them, being allergenic and toxic compounds that can cause disturbances such as in particular asthma, respiratory difficulties, irritation of the gastric mucous membranes and headaches.

For the abovementioned reasons, the use of sulphur dioxide in the winemaking field is regulated by national and Community laws that set the maximum limit concentrations allowed for sulphites in red wines, white wines and rosé wines.

In addition, sulphur dioxide is characterized by a strong extracting effectiveness of the polyphenol substances present in the skin of the grapes of the grape mass, so that its use in the presence of solid parts of the grapes leads to an enrichment of the musts with such polyphenol substances, which in the case of white wines can mean an increased susceptibility to product oxidation.

A further drawback lies in the fact that excessive quantities of sulphur dioxide can confer unpleasant taste and aromas to the wine and can facilitate its turbidity during conservation.

Therefore, in order to overcome the abovementioned drawbacks, vinification processes have been implemented that provide for the use of antioxidant products other than sulphur dioxide and which, in particular, are not harmful for the health of the consumers.

For example, for such purpose vinification processes are known which employ products for enological use containing ascorbic acid as antioxidant agent.

Nevertheless, even the vinification processes making use of such antioxidant agent have in practice proven that they do not lack drawbacks.

Indeed, as is reported in the article "The effect of ascorbic acid on oxidative browning of white wines and model wines" by Peng et al., published in 1998 in the Australian Journal of Grape and Wine Research, ascorbic acid is capable of reducing the reduction potential and the browning of white wines immediately after its introduction in the wine, while it has proven capable of promoting long-term oxidative phenomena.

The oxidation of the ascorbic acid, in fact, above all in the presence of high quantities of oxygen, leads to the formation of strongly oxidizing reaction products, such as in particular hydrogen peroxide, which can thus cause the oxidation of some constituents of the wine which, in the absence of ascorbic acid, would not result directly oxidizable by molecular oxygen.

Therefore, further vinification processes have been designed which, rather than providing for the use of antioxidant products, allow controlling the oxidation reactions of the aromatic compounds contained in the grapes and in the must, maintaining the latter in controlled atmosphere conditions, specifically oxygen-poor.

For such purpose, known from patent IT 1341382 is a vinification process which provides for a step for collecting the grapes in a pressing chamber, a step for introducing an inert gas in the pressing chamber, such as carbon or nitrogen dioxide, and a step for pressing the grapes in controlled atmosphere conditions.

The process described briefly above, even if it is effective in protecting the grapes and the must from contact with oxygen and thus in inhibiting the oxidation reactions of the aromatic compounds contained therein, nevertheless requires the use of a dedicated apparatus, as well as the feeding of the same with inert gas. The plant and management costs required for executing the above process are therefore high and thus translate into high costs for the finished wine.

In addition, the antioxidant and antioxidase effectiveness of the vinification process described briefly above cannot be ensured with certainty, given that it would be necessary to ensure the absolute lack of oxygen in the pressing chamber from the beginning, since the enzymatic oxidation reactions proceed with extremely rapid kinetics once the grape is broken/crushed (pressed) in an oxygen-rich atmospheric environment.

From the article "Antioxidant action of glutathione and the ascorbic acid/glutathione pair in a model white wine" by F. Sonni et al., it is known to add glutathione as antioxidant to model white wines, separately or in combination with ascorbic acid. The glutathione introduced in the wines already formed does not contribute to the formation of the aromatic expression of the wines themselves, but is adapted to carry out, possibly assisted by ascorbic acid, only a function of wine conservation.

The article "Influence of must composition on phenolic oxidation kinetics" by Rigaud et al. describes a study on the influence of the compounds present in the must on the kinetics of phenol oxidation, in controlled oxidation conditions. According to the teaching of such article, the knowledge of the hydrocinnamic acid and glutathione content in the must is not *per se* sufficient to provide for the oxidation kinetics of the must, since other compositional parameters determined from the starting grapes and from the employed technology are also potentially important.

### Presentation of the invention

Main object of the present invention is therefore to remedy the drawbacks manifested by the solutions of known type mentioned above, by providing a vinification process that allows effectively protecting the grapes and the must from oxidation phenomena.

A further object of the present invention is to provide a vinification process that allows obtaining wines provided with optimal organoleptic properties linked with the varietal aromas of the grapes.

A further object of the present invention is to provide a vinification process which is easy to apply.

A further object of the present invention is to provide a vinification process which is entirely reliable.

A further object of the present invention is to provide a vinification process which makes use of enological products that do not negatively affect the health of the consumers.

### Detailed description of a preferred embodiment of the present invention

The vinification process, object of the present invention, allows better preserving - with respect to the known processes - the compounds present in the grape berries and directly or indirectly responsible for the aromatic expression of the wine obtained at the end of the vinification process, controlling and limiting the oxidative phenomena that occur in the grapes in particular during vinification and which can negatively affect the organoleptic properties of the wine.

More in detail, as will be better explained hereinbelow, such vinification process has been designed for the purpose of inhibiting the enzymatic and chemical oxidative reactions that occur during the initial vinification steps, before the alcoholic fermentation, and in particular at the time of production of the juice from the grapes of the grape mass. Such reactions in fact lead to the rapid oxidation of the oxidizable constituents contained in the grapes, such as in particular several aromatic compounds as well as several odorless aroma precursors present in the grape berries which are susceptible to releasing aromatic compounds in the course of the subsequent vinification steps.

The vinification process according to the present invention is in particular adapted to be employed for obtaining white wines or rosé wines, which have a low, substantially negligible content of polyphenol substances.

The same process can nevertheless also be employed for obtaining red wines, without departing from the protective scope of the present patent.

In the vinification process in accordance with the present invention, the inhibition of the oxidative phenomena due both to the chemical reactions and to the enzymatic reactions has been made possible due to the use of an enological product, also an object of the present invention; such product jointly contains glutathione, a tripeptide naturally present in the grapes formed by the amino acid units glutamic acid, cysteine and glycine, and ascorbic acid. The glutathione and the ascorbic acid present in the aforesaid enological product are adapted to carry out a synergistic action of protection of the grapes from oxidative phenomena, as is better specified hereinbelow.

The vinification process according to the present invention comprises, in a *per se* conventional manner, a step for arranging a grape mass.

In particular the step for arranging a grape mass advantageously comprises, as is known, a step for collecting grapes adapted to define the aforesaid grape mass, which can be manually or mechanically carried out, a step for arranging, in a transport container, the grape mass defined by the collected grapes and a step for transferring the grape mass arranged in the transport container to a place for processing, such as a wine cellar, where the grape mass is intended to be subjected to the subsequent steps of the vinification process.

The process further comprises a step for pressing the grape mass in order to extract the juice from the grapes and form a pressing liquid containing aromatic oxidizable constituents or aroma precursors made available in the pressing liquid by the pressing step.

During the pressing step, in fact, the breakage/crushing of the grapes of the grape mass and, at microscopic level, of the cellular walls of the cells constituting them, causes the release of oxidizing constituents in the pressing liquid, such as phenols and anthocyans for example, which are contained in the integral cells of the grapes of the grape mass in cellular substrates where they are preserved.

Advantageously, the process according to the invention further comprises a step for obtaining a must from the pressing liquid and a step for fermenting the must. The process according to the present invention can of course comprise further steps of processing and/or treating the grapes or the must generally provided for in vinification processes, such as a destemming step that can be provided before during or after the pressing step, a draining step, one or more pressing steps and a dregs removal step, without departing from the protective scope defined by the present patent.

In accordance with the idea underlying the present invention, the vinification process further comprises at least one first step for adding, to the grape mass, an amount of an enological product containing glutathione and ascorbic acid; such first adding step precedes the pressing step as is better explained hereinbelow. Following the addition of the aforesaid enological product to the grape mass, the ascorbic acid contained therein reacts with the oxidizing compounds present in the pressing liquid, i.e. mainly with the molecular oxygen, generating reaction products in turn oxidizing (such as in particular hydrogen peroxide) according to a first direct antioxidant action. The glutathione contained in the enological product reacts with oxidizing compounds present in the pressing liquid and simultaneously reacts with the oxidizing reaction products generated from the oxidation of the ascorbic acid, according to a second antioxidant action, and inhibits the action of oxidase enzymes, according to a simultaneous antioxidase action. More in detail, in carrying out its antioxidase action, glutathione reacts with compounds that are the result of oxidative reactions of the enzymes forming the GRP (Grape Reaction Product).

The antioxidant actions and the antioxidase action protect the aromatic oxidizable constituents or aroma precursors contained in the pressing liquid from oxidation.

Indeed, as specified above, following the breakage/crushing of the grapes and the cellular walls in the pressing step, the oxidizable constituents contained in the grapes are released into the pressing liquid where their contact with the oxidizing compounds is capable of causing oxidation. In particular, among the oxidizing compounds susceptible of causing a rapid oxidation of the aforesaid oxidizable constituents, there are the oxidase enzymes, normally present in the grapes of the grape mass; such oxidase enzymes are divided into compartments in the cells within the cytoplasm or in specific cellular organelles where their activity is controlled. With the lack of compartment division at the time of breakage of the cellular walls, such oxidase enzymes are susceptible of entering into contact with the cellular substrates, and consequently oxidizing the oxidizable constituents contained therein.

In the pressing liquid and subsequently in the must, the enzymatic oxidation reactions are more important than the chemical oxidation reactions, since they are characterized by very high kinetics. On the contrary, in the finished wine, the chemical reactions are more important. The enzymatic oxidation reactions are extremely rapid, with an oxygen consumption speed that can exceed 2 mg/l per minute, whereas in a wine the oxygen consumption speed is generally on the order of 2 mg/l per day.

The glutathione and the ascorbic acid contained in the enological product employed in the process in accordance with the present invention are therefore adapted to carry out a synergistic antioxidant action and antioxidase action, protecting the oxidizable constituents, and in particular the phenolic and aromatic compounds present in the grapes, from the oxidation reactions. In addition, the glutathione and the ascorbic acid contained in the aforesaid enological product also protect the odorless aroma precursors from oxidation; these are present in the grapes and susceptible of releasing aromatic compounds in the subsequent vinification steps (e.g. in the course of fermentation); such aromatic compounds include for example volatile thiols, which contribute in an important manner to determining the varietal or primary aromas of the wine at the end of vinification, which confer known olfactory characteristics to the wine. The oxidation of such aroma precursors would cause the irreparable loss of at least part of the varietal aromas in the finished wine.

The addition of glutathione and ascorbic acid to the grape mass according to the process in accordance with the present invention has in particular proven suitable for protecting, for example, the cysteine derivatives from which aromatic compounds of thiol character are subsequently derived in the must; such compounds are particularly interesting for wines with regard to quality.

Both the ascorbic acid and the glutathione added to the grape mass are oxidized in a preferred manner with respect to the oxidizable constituents contained in the pressing liquid.

More in detail, the ascorbic acid is in particular adapted to inhibit the chemical oxidation of such constituents, since it acts as a reducing compound, capable of being combined with the molecular oxygen trapped in the mass of grapes or present in solution in the pressing liquid, in the presence of metallic catalysts such as iron and copper.

The oxidation reactions of the ascorbic acid are rapid and allow the nearly instantaneous elimination of the molecular oxygen trapped in the grape mass or dissolved in the pressing liquid. Therefore, the ascorbic acid is capable of effectively and immediately eliminating the oxidation reactions of the oxidizable constituents of the grapes.

Nevertheless, the oxidation reactions of the ascorbic acid lead in particular to the formation of hydrogen peroxide, which is strongly oxidizing, which would lead to the oxidation of the oxidizable constituents of the grapes present in the pressing liquid.

The oxidation reactions of the glutathione contained in the enological product used in the process according to the present invention are slower than the oxidation reactions of the ascorbic acid.

Therefore, the glutathione added to the grape mass carries out an antioxidant action that is complementary to the antioxidant action of the ascorbic acid.

More in detail, in fact, glutathione, in addition to carrying out a direct antioxidant action via reaction with oxygen and more generally with the oxidizing compounds present in the grape mass or in the pressing liquid, is adapted to react with the hydrogen peroxide formed following the oxidation of the ascorbic acid, thus protecting the oxidizable constituents contained in the pressing liquid from the chemical oxidation which would otherwise be caused by the reaction products of the ascorbic acid. In addition, the glutathione carries out an antioxidase action, inhibiting the enzymatic oxidative reactions for the formation of GRP.

Glutathione, if it remains in the must and subsequently in the wine, is also adapted to prevent the formation of free radicals, and is adapted to inhibit the enzymatic and non-enzymatic mechanisms involved in the browning phenomenon of the must and wine.

Therefore, the joint presence of ascorbic acid and glutathione in the enological product employed in the process in accordance with the present invention allows carrying out an effective and rapid action of protection of the pressing liquid from chemical oxidation, due to the presence of the ascorbic acid, whose oxidation kinetics are particularly fast, and due to the joint presence of glutathione which consumes the hydrogen peroxide generated by the oxidation reactions of the ascorbic acid; it also allows carrying out an effective action of protection of the pressing liquid from enzymatic oxidation, due to the presence of glutathione which reacts with the catabolites generated by the enzymatic oxidation reactions, stopping them.

The vinification process according to the present invention therefore allows effectively controlling both chemical oxidation and enzymatic oxidation in the earliest vinification steps, preserving intact in particular those oxidizable constituents which contribute to defining the varietal or primary aromas of the wine.

In addition, the fact that the ascorbic acid is characterized by much quicker oxidation kinetics than the oxidation kinetics of the glutathione allows facilitating the maintenance of residue quantities of glutathione in the reduced state in the pressing liquid and subsequently in the must during vinification, also in the fermentation and subsequent steps.

The glutathione that remains in the must facilitates the formation and conservation during fermentation of aromatic thiol compounds, often of particular importance for the wine quality, as well as generally facilitating the subsequent conservation of the wine. The addition of the enological product to the grapes before pressing allows inhibiting - already in the initial steps of vinification - the oxidation reactions of the oxidizable constituents present in the grapes and/or in the must and subjected to enzymatic degradations characterized by extremely fast kinetics.

Due to the addition of the enological product to the grapes, the oxidizable constituents and in particular the aromatic compounds or aroma precursors contained in the grapes are protected from oxidation, such that the aromatic compounds are maintained substantially unchanged during the entire vinification process whereas the aroma precursors are preserved for their subsequent transformations during which aromatic compounds derived therefrom are liberated, at the end of vinification fully conferring to the wine the distinct organoleptic properties of the grapes.

Also the oxidation of phenolic substances is inhibited, preventing the formation of oxidized phenols that can subsequently give rise to other oxidative degradations by means of coupled reactions.

The addition of the enological product containing glutathione and ascorbic acid in the subsequent vinification steps, i.e. in particular to the must during fermentation or to the wine after fermentation, unlike that provided in the process according to the present invention, would not allow obtaining a wine having the same organoleptic properties of the wine obtained with the process according to the present invention, since part of the oxidizable constituents and in particular the aromatic compounds or aroma precursors present in the grapes would have already been oxidized at the time of the addition of the enological product to the must or to the wine and the organoleptic properties of the wine itself would have already been compromised. The vinification process according to the present invention provides that the first step for adding the enological product containing glutathione and ascorbic acid precedes the pressing step, i.e. the enological product is added directly to the grape mass during the step for arranging the grape mass, for example already in the field during collection, in particular by adding the enological product to the grapes until the latter are arranged inside the transport containers; this in order to prevent that the accidental breakage of part of the grapes, due to the mechanical stresses to which the grapes are subjected, can expose the oxidizable constituents to oxidation. The addition of the enological product directly to the grapes in fact allows intervening on the oxidative reactions, in particular of enzymatic type, that are initiated at the time of breakage of the grapes; such reactions are particularly rapid. More in detail, at the time of formation of the grape juice, enzymatic oxidation reactions are verified that in particular involve the vegetable phenols contained in the grapes and which are catalyzed by enzymes, by means of the molecular oxygen that is in contact with the grapes themselves. The control, or rather inhibition, of such oxidation reactions allows substantially preserving intact the vegetable phenols contained in the grapes, ensuring better organoleptic properties to the wine at the end of vinification.

The vinification process according to the present invention can also be advantageously applied in the processing of white wines prefermentation maceration techniques (skin contact, skin maceration, cold maceration) conducted in reduction conditions. The enological product employed in the process according to the present invention, in fact, unlike the products containing sulphur dioxide, does not facilitate the extraction of phenol substances from the skins of the grapes; such extraction is undesired in the processing of white wines since it causes oxidative instability and the loss of product elegance.

In addition, the process according to the invention can be advantageously employed in association with oxidation protection techniques, such as cold vinification techniques or vinification techniques in inert environments.

Advantageously, in the first adding step, glutathione is added to the grapes by means of the enological product in an amount comprised between 10 and 50 ppm with respect to the grape mass and, preferably, comprised between 15 and 30 ppm with respect to the grape mass.

In addition, in the first adding step, the ascorbic acid is added to the grapes by means of the enological product in an amount comprised between 40 and 80 ppm with respect to the grape mass.

Preferably, the ratio between the weight of the glutathione and the weight of the ascorbic acid added to the grapes by means of the enological product amount during the first adding step is comprised between 0.12 and 1.25 and preferably between 0.2 and 1.

In particular, the ratio between the weight of the glutathione and the weight of the ascorbic acid can be varied as a function of the characteristics of the grapes employed in the vinification process. The amount of glutathione can for example be reduced if the vinification process affects grapes that are naturally rich with this compound.

In addition, the ratio between the weight of the glutathione and the weight of the ascorbic acid can also be varied as a function of the characteristics of the substrate, i.e. in particular of the amount of hydroxycinnamoyltartaric acids, and especially of caftaric acid, present in the grapes, given that the amount of glutathione can be increased if the aforesaid acids are present in high quantities. The ratio by weight between the glutathione and the ascorbic acid can still be varied as a function of the specific vinification technology employed. If for example in the white-wine vinification, the use of prefermentation maceration techniques is provided for - which involve an introduction of greater amounts of oxidizable substances in the must - it will be opportune to increase the content of glutathione in the enological product amount.

The ratio by weight between the glutathione and the ascorbic acid is thus optimized in the product used in the process according to the invention for designing specific preparations for the processing of different grapes with different vinification technologies.

In accordance with one possible embodiment of the vinification process according to the present invention, the enological product introduced into the grape mass in the first adding step can comprise, in addition to ascorbic acid and glutathione, also tannins or yeast derivatives. More in detail, the enological product can comprise, in addition to ascorbic acid and glutathione, only tannins, only yeast derivatives, or both of these compounds.

Tannins are adapted to assist glutathione in inhibiting the chemical oxidation, having slower reaction kinetics than ascorbic acid, and in inhibiting enzymatic oxidation, being capable of complexing both the tyrosinase of the grapes and the possible fungal laccases.

The yeast derivatives are in particular adapted to assist glutathione in inhibiting chemical oxidation; they also have slower reaction kinetics than ascorbic acid.

The presence of tannins and/or yeast derivatives in the enological product employed in the process according to the present invention facilitates the maintenance of greater amounts of glutathione in the reduced state in the must in the subsequent fermentation and vinification steps, with the abovementioned advantages thereof that follow.

The vinification process according to the invention can further comprise one or more second steps for adding an amount of the enological product to the must, in particular before the fermentations step, in order to supplement the amounts of glutathione and ascorbic acid (and possibly tannins and/or yeast derivatives) brought with the first adding step and at least partially consumed by oxidation reactions.

For the same purpose, further steps can also be provided for adding amounts of the enological product to the must or even to the finished wine before its bottling.

Glutathione and ascorbic acid, unlike sulphur dioxide, are completely innocuous for the health of the consumer and do not confer unpleasant taste and aromas to the wine.

Advantageously, the product used in the process in accordance with the present invention, the product not forming part of the invention, can be arranged in a package containing metered amounts of glutathione and ascorbic acid (and possibly tannins and/or yeast derivatives as explained hereinbelow) mixed together in proportions more suitable for the different vinification technologies and grape types.

More in detail, the enological product can be arranged in single-dose packages adapted to be added to pre-established volumes or masses of grapes and/or must during each of the adding steps of the vinification process according to the present invention.

The arrangement of the enological product in single-dose packages allows considerably facilitating the use of such product.

The finding according to the present invention attains the pre-established objects.

## Claims

1. Vinification process, which comprises:
- a step for arranging a grape mass;
- a step for pressing said grape mass in order to extract the juice from the grapes of said grape mass and form a pressing liquid containing aromatic oxidizable constituents or aroma precursors made available in said pressing liquid from said pressing step;
**characterized in that** it further comprises:
- at least one first step for adding an amount of an enological product containing glutathione and ascorbic acid to said grape mass, before said pressing step, in which said ascorbic acid reacts with oxidizing compounds present in said pressing liquid, generating oxidizing reaction products according to a first antioxidant action and in which said glutathione reacts with oxidizing compounds present in said pressing liquid and at the same time reacts with the oxidizing reaction products generated from the oxidation of said ascorbic acid according to a second antioxidant action and inhibits the action of oxidase enzymes, according to a simultaneous antioxidase action, said antioxidant actions and said antioxidase action protecting said aromatic oxidizable constituents or aroma precursors contained in said pressing liquid from oxidation; wherein said at least one first step for adding an amount of said enological product is carried out during said step for arranging a grape mass and precedes said pressing step; wherein said step for arranging a grape mass comprises a step for collecting grapes adapted to define said grape mass, a step for arranging, in a transport container, said grape mass defined by the collected grapes and a step for transferring said grape mass arranged in said transport container to a place for processing and said at least one first step for adding an amount of said enological product is carried out during said step for arranging of said grape mass in said transport container, in order to prevent that the accidental breakage of part of the grapes, due to the mechanical stresses to which the grapes are subjected, can expose oxidizable constituents to oxidation;
wherein during said at least one first adding step, said glutathione is added to said grape mass by means of said enological product in an amount comprised between 10 and 50 ppm with respect to the mass of said grape mass;
wherein during said at least one first adding step, said ascorbic acid is added to said grape mass by means of said enological product in an amount comprised between 40 and 80 ppm with respect to the mass of said grape mass.

2. Vinification process according to claim 1, **characterized in that** during said at least one first adding step, said glutathione and said ascorbic acid are added to said grape mass by means of said enological product in a ratio by weight comprised between 0.12 and 1.25.

3. Vinification process according to claim 1 or 2, **characterized in that** the enological product added to said grape mass during said at least one first adding step further contains tannins and/or yeast derivatives.

4. Vinification process according to any one of the preceding claims, **characterized in that** it further comprises:
- a step for obtaining a must from said pressing liquid;
- a step for fermenting said must; and
- at least one second step for adding an amount of said enological product to said must before said fermenting step in order to supplement at least the quantities of said glutathione and said ascorbic acid brought with said at least one first adding step and at least partially consumed by oxidation reactions.

## Patentansprüche

1. Weinbereitungsverfahren, das Folgendes umfasst:
- einen Schritt zum Anordnen einer Trau benmasse;
- einen Schritt zum Pressen der genannten Traubenmasse, um den Saft aus den Trauben der genannten Traubenmasse zu extrahieren und eine Pressflüssigkeit zu bilden, die oxidierfähige aromatische Bestandteile oder Aromavorstufen enthält, die in der genannten Pressflüssigkeit aus dem genannten Pressschritt verfügbar gemacht werden;
**dadurch gekennzeichnet, dass** es außerdem Folgendes umfasst:
- mindestens einen ersten Schritt zum Hinzufügen eines Anteils eines Glutathion und Ascorbinsäure enthaltenden önologischen Produkts zu der genannten Traubenmassen vor dem genannten Pressschritt, bei dem die genannte Ascorbinsäure mit in der genannten Pressflüssigkeit enthaltenen oxidierenden Verbindungen reagiert und entsprechend einer ersten Antioxidantwirkung oxidierende Reaktionsprodukte erzeugt und bei dem das genannte Glutathion mit in der genannten Pressflüssigkeit vorhandenen oxidierenden Verbindungen und gleichzeitig mit den oxidierenden Reaktionsprodukten aus der Oxidation der genannten Ascorbinsäure entsprechend einer zweiten Antioxidantwirkung reagiert und die Wirkung von Oxidaseenzymen entsprechend einer gleichzeitigen Antioxidase-Wirkung hemmt, wobei die genannten Antioxidantwirkungen die in der genannten Pressflüssigkeit enthaltenen oxidierbaren aromatischen Bestandteile oder Aromavorstufen vor Oxidation schützt;
wobei der genannte mindestens eine Schritt zum Hinzufügen eines Anteils des genannten önologischen Produkts während des genannten Schritts zum Anordnen einer Traubenmasse ausgeführt wird und dem genannten Pressschritt vorausgeht;
wobei der genannte Schritt zum Anordnen einer Traubenmasse einen Schritt zum Lesen von zum Definieren der genannten Traubenmasse geeigneten Trauben, einen Schritt zum Anordnen der genannten aus den gelesenen Trauben definierten Traubenmasse in einem Transportbehälter und einen Schritt zum Verlegen der genannten in dem genannten Transportbehälter angeordneten Traubenmasse an einen Ort zur Verarbeitung umfasst und der genannte mindestens eine Schritt zum Hinzufügen eines Anteils des genannten önologischen Produkts während des genannten Schritts zum Anordnen der genannten Traubenmasse in dem genannten Transportbehälter ausgeführt wird, um zu verhindern, dass das versehentliche Brechen eines Teils der Trauben aufgrund mechanischer Beanspruchungen, denen die Trauben unterliegen, oxidierfähige Bestandteile der Oxidation freisetzen kann;
wobei während des genannten mindestens einen Hinzufügungsschritts das genannte Glutathion zu der genannten Traubenmasse mittels des genannten önologischen Produkts in einem Anteil zwischen 10 und 50 ppm im Verhältnis zum Gewicht der genannten Traubenmasse hinzugefügt wird;
wobei während des genannten mindestens einen Hinzufügungsschritts die genannte Ascorbinsäure zu der genannten Traubenmasse mittels des genannten önologischen Produkts in einem Anteil zwischen 40 und 80 ppm im Verhältnis zum Gewicht der genannten Traubenmasse hinzugefügt wird;

2. Weinbereitungsverfahren nach Anspruch 1, **dadurch gekennzeichnet, dass** während des genannten mindestens einen Hinzufügungsschritts das genannte Glutathion und die genannte Ascorbinsäure zu der genannten Traubenmasse mittels des genannten önologischen Produkts im Verhältnis zum Gewicht zwischen 0,12 und 1,25 hinzugefügt werden.

3. Weinbereitungsverfahren nach Anspruch 1 oder 2, **dadurch gekennzeichnet, dass** das zu der genannten Traubenmasse während des genannten mindestens einen ersten Hinzufügungsschritts hinzugefügte önologische Produkt Tannine und/oder Hefeerzeugnisse enthält.

4. Weinbereitungsverfahren nach einem der vorangegangenen Ansprüche, **dadurch gekennzeichnet, dass** es außerdem Folgendes umfasst:
einen Schritt zum Erhalten einer Maische aus der genannten Pressflüssigkeit;
- einen Schritt zum Gären der genannten Maische; und
- mindestens einen zweiten Schritt zum Hinzufügen eines Anteils des genannten önologischen Produkts zu der genannten Maische vor dem genannten Gärschritt, um mindestens die bei dem genannten mindestens einem ersten Hinzufügungsschritt Anteile des genannten Glutathions und der genannten Ascorbinsäure zuzusetzen, die durch die Oxidationsreaktionen mindestens zum Teil verbraucht wurden.

## Revendications

1. Procédé de vinification, qui comprend :
- une étape de disposition d'un ensemble de grappes ;
- une étape de pressage dudit ensemble de grappes afin d'extraire le jus des grappes dudit ensemble de grappes et former un liquide de pressage contenant des composants aromatiques oxydables ou précurseurs d'arôme rendus disponibles dans ledit liquide de pressage dérivé de ladite étape de pressage ;
**caractérisé en ce qu'**il comprend en outre :
- au moins une première étape d'addition d'une quantité d'un produit oenologique contenant le glutathion et l'acide ascorbique audit ensemble de grappes, avant ladite étape de pressage, où l'acide ascorbique réagit avec les composés oxydants présents dans ledit liquide de pressage, pour générer des produits de la réaction d'oxydation selon une première action antioxydante et où le glutathion réagit avec les composés oxydants présents dans ledit liquide de pressage, en même temps, réagit avec les produits de la réaction d'oxydation générés par l'oxydation de l'acide ascorbique, selon une deuxième action antioxydante, et inhibe l'action des enzymes oxydase, selon une action simultanée antioxydase, lesdites actions antioxydantes et ladite action antioxydase protégeant de l'oxydation, les constituants aromatiques oxydables ou précurseurs d'arômes présents dans ledit liquide de pressage ;
où ladite au moins une première étape d'addition d'une quantité dudit produit oenologique est réalisée pendant ladite étape de disposition d'un ensemble de grappes et précède ladite étape de pressage ;
où ladite étape de disposition d'un ensemble de grappes comprend une étape de récolte des grappes, apte à définir ledit ensemble de grappes, une étape de disposition dans un récipient de transport dudit ensemble de grappes défini par les grappes récoltées et une étape de transfert dudit ensemble de grappes disposé dans ledit récipient de transport vers un site de traitement et ladite au moins une première étape d'addition d'une quantité dudit produit oenologique est réalisée pendant ladite étape de disposition dudit ensemble de grappes dans ledit récipient de transport, afin de prévenir l'exposition des constituants oxydables à l'oxydation suite à la rupture accidentelle d'une partie des grappes en raison des contraintes mécaniques auxquelles sont soumises les grappes ;
où pendant ladite au moins une première étape d'addition, le glutathion est ajouté à l'ensemble de grappes via le produit oenologique, en une quantité comprise dans l'intervalle allant de 10 à 50 ppm par rapport à la masse de l'ensemble de grappe ;
où pendant la au moins une première étape d'addition, l'acide ascorbique est ajouté à l'ensemble de grappes via le produit oenologique, en une quantité comprise dans l'intervalle allant de 40 à 80 ppm par rapport à la masse de l'ensemble de grappes.

2. Procédé de vinification selon la revendication 1, **caractérisé en ce que** pendant ladite au moins une première étape d'addition, ledit glutathion et ledit acide ascorbique sont ajoutés à l'ensemble de grappes par ledit produit oenologique en un rapport pondéral situé dans l'intervalle allant de 0,12 à 1,25.

3. Procédé de vinification selon la revendication 1 ou 2, **caractérisé en ce que** le produit oenologique ajouté audit ensemble de grappes pendant ladite au moins une première étape d'addition contient en outre, des tanins et/ou des dérivés de levure.

4. Procédé de vinification selon l'une quelconque des revendications précédentes, **caractérisé en ce qu'**il comprend en outre :
- une étape d'obtention d'un moût à partir dudit liquide de pressage ;
- une étape de fermentation dudit moût, et
- au moins une deuxième étape d'addition d'une quantité dudit produit oenologique audit moût avant ladite étape de fermentation pour complémenter au moins les quantités de glutathion et d'acide ascorbique ajoutées lors de ladite au moins une première étape d'addition et consommées au moins partiellement par les réactions d'oxydation.
